# EUROPEAN PATENT APPLICATION

(11) **EP 4 668 824 A1**
(43) Date of publication of application: **24.12.2025**
(21) Application number: 23922058.5
(22) Date of filing: 17.02.2023
(51) Int. Cl.: H04W 24/02

(54) **INFORMATION TRANSMISSION METHOD AND APPARATUS, DEVICE, MEDIUM, AND PROGRAM PRODUCT**

(71) Applicant: Beijing Xiaomi Mobile Software Co., Ltd., Beijing 100085 (CN)
(72) Inventor: WU, Shijuan, Beijing 100085 (CN)
(74) Representative: Dehns Germany Partnerschaft mbB
(86) International application number: PCT/CN2023/076999
(87) International publication number: WO 2024/168927

(57) **Abstract**

The present application discloses an information transmission method and apparatus, a device, a medium, and a program product, and belongs to the field of communication. The method is performed by a terminal device The method comprises: receiving a CLI measurement reporting configuration based on layer 1/layer 2, wherein the CLI measurement reporting configuration based on layer 1/layer 2 is used for executing CLI measurement reporting. According to the method, the CLI measurement reporting configuration based on layer 1/layer 2 is received, so that the terminal device can handle different channel conditions according to a condition reported by the CLI, the impact of the CLI is reduced, and the communication performance is improved.

## Description

### TECHNICAL FIELD

The embodiments of the present disclosure relate to the field of communications, and in particular to an information transmission method, an apparatus, a device, a medium, and a program product.

### BACKGROUND

In a dynamic time division duplex (DTDD) communication scenario, inconsistent data transmission directions of terminal devices or network devices in adjacent cells will cause interference.

### SUMMARY

The present disclosure provides an information transmission method, an apparatus, a device, a medium, and a program product. The technical solutions at least include:

According to an aspect of the embodiments of the present disclosure, there is provided an information transmission method, performed by a terminal device, including:
receiving a Layer 1/Layer 2-based cross-link interference (CLI) measurement reporting configuration, the Layer 1/Layer 2-based CLI measurement reporting configuration being configured to perform CLI measurement reporting.

According to another aspect of the embodiments of the present disclosure, there is provided an information transmission method, performed by a network device, including:
sending a Layer 1/Layer 2-based cross-link interference CLI measurement reporting configuration, the Layer 1/Layer 2-based CLI measurement reporting configuration being configured to perform CLI measurement reporting.

According to another aspect of the embodiments of the present disclosure, there is provided an information transmission device, including:
a receiving module configured to receive a Layer 1/Layer 2-based CLI measurement reporting configuration, where the Layer 1/Layer 2-based CLI measurement reporting configuration is configured to perform CLI measurement reporting.

According to another aspect of the embodiments of the present disclosure, there is provided an information transmission device, including:
a sending module configured to send a Layer 1/Layer 2-based CLI measurement reporting configuration, where the Layer 1/Layer 2-based CLI measurement reporting configuration is configured to perform CLI measurement reporting.

According to another aspect of the embodiments of the present disclosure, there is provided a terminal device, including:
a processor;
a transceiver connected to the processor; and
a memory for storing executable instructions for the processor;
where the processor is configured to load and execute the executable instructions to implement the information transmission method according to the above aspects.

According to another aspect of the embodiments of the present disclosure, there is provided a network device, including:
a processor;
a transceiver connected to the processor; and
a memory for storing executable instructions for the processor;
where the processor is configured to load and execute the executable instructions to implement the information transmission method according to the above aspects.

According to another aspect of the embodiments of the present disclosure, there is provided a computer-readable storage medium, where the computer-readable storage medium stores at least one instruction, at least one program segment, a code set or an instruction set, wherein at least one instruction, at least one program segment, a code set or an instruction set is loaded and executed by a processor to implement the information transmission method according to the above aspects.

According to another aspect of the embodiments of the present disclosure, there is provided a computer program product or a computer program, where the computer program product or the computer program includes computer instructions, the computer instructions are stored in a computer-readable storage medium, a processor obtains the computer instructions from the computer-readable storage medium, and the processor loads and executes the computer instructions to implement the information transmission method according to the above aspects.

The technical solutions provided by the embodiments of the present disclosure may have the following beneficial effects:

The present disclosure receives a CLI measurement reporting configuration of Layer 1/Layer 2 and uses the CLI measurement reporting configuration of Layer 1/Layer 2 to perform CLI measurement reporting. This allows the terminal device to respond to different channel conditions based on the CLI reporting, reducing the impact of CLI and improving communication performance.

### BRIEF DESCRIPTION OF THE DRAWINGS

To more clearly illustrate the technical solutions in the embodiments of the present disclosure, the following briefly describes the figures used in describing the embodiments. Obviously, the figures described below illustrate only some embodiments of the present disclosure. Those skilled in the art can derive other figures based on these figures without inventive effort.
FIG. 1 shows a schematic diagram of a communication system according to an example embodiment of the present disclosure;
FIG. 2 shows a flow chart of an information transmission method according to an example embodiment of the present disclosure;
FIG. 3 shows a schematic diagram of a channel state information reporting configuration according to an example embodiment of the present disclosure;
FIG. 4 shows a schematic diagram of first configuration information according to an example embodiment of the present disclosure;
FIG. 5 shows a flow chart of an information transmission method according to an example embodiment of the present disclosure;
FIG. 6 shows a block diagram of an information transmission device according to an example embodiment of the present disclosure;
FIG. 7 shows a block diagram of an information transmission device according to an example embodiment of the present disclosure;
FIG. 8 shows a schematic diagram of a structure of a terminal device or a network device according to an example embodiment of the present disclosure.

### DETAILED DESCRIPTION

To further clarify the objectives, technical solutions, and advantages of the present disclosure, embodiments of the present disclosure will be described in further detail below with reference to the accompanying drawings.

Example embodiments will be described in detail herein, with examples illustrated in the accompanying drawings. When the following description refers to the drawings, identical numerals in different drawings represent identical or similar elements, unless otherwise indicated. The embodiments described in the following example embodiments do not represent all embodiments consistent with present disclosure. Rather, they are merely examples of apparatuses and methods consistent with certain aspects of present disclosure, as detailed in the appended claims.

The terminology used in present disclosure is for the purpose of describing particular embodiments only and is not intended to be limiting. As used in present disclosure and the appended claims, the singular forms "a," "an," and "the" are intended to include the plural forms, unless the context clearly indicates otherwise. It should also be understood that the term "and/or" as used herein refers to and encompasses any and all possible combinations of one or more of the associated listed items.

It should be noted that the user information (including but not limited to user device information, user personal information, etc.) and data (including but not limited to data used for analysis, storage, and display, etc.) referred to in present disclosure are all information and data authorized by the user or fully authorized by all parties. The collection, use, and processing of the relevant data must comply with the relevant laws, regulations, and standards of the relevant countries and regions.

It should be understood that although present disclosure may use the terms "first," "second," etc. to describe various types of information, such information should not be limited to these terms. These terms are merely used to distinguish between information of the same type. For example, a first parameter may also be referred to as a second parameter, and similarly, a second parameter may also be referred to as a first parameter, without departing from the scope of present disclosure. Depending on the context, the term "if" as used herein may be interpreted as "upon," "when," or "in response to a determining".

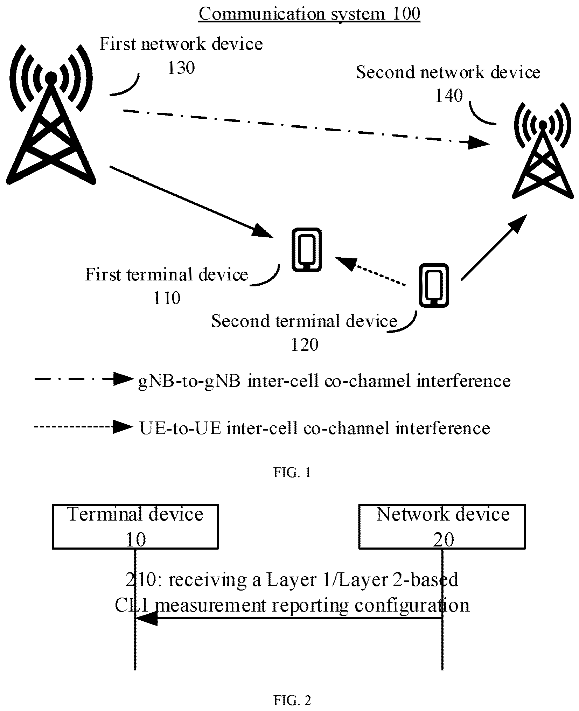

FIG. 1 shows a schematic diagram of a communication system 100 provided in an example embodiment of the present disclosure. The communication system 100 includes terminal devices and network devices. The terminal devices include a first terminal device 110 and a second terminal device 120, and the network devices include a first network device 130 and a second network device 140.

The terminal device may refer to a user equipment (UE), an access terminal, a subscriber unit, a subscriber station, a mobile, a mobile station, a remote station, a remote terminal, a mobile device, a wireless communication device, a user agent, or a user device. Alternatively, the terminal device may be a cellular phone, a cordless phone, a Session Initiation Protocol (SIP) phone, a wireless local loop (WLL) station, a personal digital assistant (PDA), a handheld device with wireless communication capability, a computing device or other processing device connected to a wireless modem, a vehicle-mounted device, a wearable device, a terminal device in the fifth generation mobile communication system (5GS) or a terminal device in the future Public Land Mobile Network (PLMN), etc., though this is not a limitation in the embodiments of the present disclosure. For ease of description, the devices mentioned above are collectively referred to as terminal devices. There are typically multiple terminal devices, and each cell managed by the network device may contain one or more terminal devices.

The network device is a device deployed in an access network to provide wireless communication capability for terminal devices. The network device can include various forms of macro base stations, micro base stations, relay stations, access points, and so on. In systems employing different wireless access technologies, the names of devices that perform network device functions may vary. For example, in the 5th Generation New Radio (5G NR) system, it is referred to as a next-generation base station (gNodeB, gNB). As communication technologies evolve, the term "network device" may change. For ease of description, in the embodiments of present disclosure, the aforementioned devices that provide wireless communication functions for terminal devices are collectively referred to as network devices. For example, in a Long Term Evolution (LTE) system, the network device may be an Evolved Universal Terrestrial Radio Access Network (EUTRAN) or one or more evolved base stations within the EUTRAN; in a 5G NR system, the network device may be a Radio Access Network (RAN) or one or more gNBs within the RAN.

In the embodiments of present disclosure, the terms "network" and "system" are often used interchangeably, but those skilled in the art will understand their meanings. The technical solutions described in the embodiments of present disclosure are applicable to LTE systems, 5G systems, subsequent evolution systems of 5G NR systems, or other communication systems, and are not limited in present disclosure.

In DTDD communication scenarios, inconsistent data transmission directions between terminal devices or network devices in adjacent cells can cause interference. As shown in FIG. 1, interference exists between a first terminal device 110 and a second terminal device 120, and between a first network device 130 and a second network device 140.

To measure interference between terminal devices in adjacent cells, in the related art, CLI-Reference Signal Received Power (RSRP) and CLI-Received Signal Strength Indication (RSSI) are used to measure the interference for RSRP and RSSI between corresponding terminal devices, and a Layer 3 (L3)-based CLI reporting protocol framework is defined.

To further address CLI issues and improve CLI measurement reporting performance, a Layer 1/Layer 2 (L1/L2) CLI reporting protocol framework needs to be designed. If the relevant protocols support L1/L2-based CLI reporting, the terminal device needs to perform CLI measurement reporting based on the corresponding CLI measurement/report configuration. The relevant protocols are as follows:

### Agreement

For the purpose of UE-to-UE CLI mitigation, consider the following potential enhancements:
- For L1/L2 UE-to-UE CLI reporting, periodic, semi-persistent, or aperiodic reporting.
- FFS: Event-triggered reporting.

For L1/L2 UE-to-UE CLI measurement, periodic, semi-persistent, or aperiodic measurement resource.

For the purpose of mitigating cross-link interference between terminal devices, consider the following potential enhancements:
- For L1/L2 UE-to-UE cross-link interference reporting, periodic, semi-persistent, or aperiodic reporting.
- For further study: Event-triggered reporting.

For cross-link interference measurement between L1/L2 terminal devices, periodic, semi-continuous, or aperiodic measurement resources.

FIG. 2 shows a flowchart of an information transmission method provided by an example embodiment of the present disclosure. The method is performed by a terminal device and includes:

Step 210: receiving a Layer 1/Layer 2-based CLI measurement reporting configuration.

In some embodiments, the Layer 1/Layer 2-based CLI measurement reporting configuration may also be referred to as a Layer 1/Layer 2-based CLI reporting configuration. The Layer 1/Layer 2-based CLI measurement reporting configuration is configured to perform CLI measurement reporting.

The Layer 1/Layer 2-based CLI measurement reporting configuration includes at least one of the following:
- a measurement resource configuration;
- a reporting configuration;
- a performance indicator related to the CLI measurement.

In some embodiments, the measurement resource configuration indicates at least one of a time domain position and a frequency domain position for the CLI measurement. This measurement resource configuration may also be referred to as a measurement configuration or a resource configuration.

The reporting configuration indicates at least one of a time domain position, a frequency domain position, and a reporting granularity for CLI reporting.

CLI reporting includes at least one of periodic reporting, semi-continuous reporting, and aperiodic reporting.

For periodic reporting, CLI measurement results are reported periodically and do not require triggering. The terminal device directly performs periodic reporting according to the reporting configuration.

For semi-continuous reporting, the terminal device performs periodic CLI reporting after receiving an activation command and stops CLI reporting after receiving a deactivation command.

For aperiodic reporting, CLI measurement results are not reported periodically. The terminal device performs CLI reporting after Downlink Control Information (DCI) sent by the network device triggers the reporting.

In some embodiments, the reporting configuration indicates that CLI reporting occurs on the Physical Uplink Shared Channel (PUSCH) or the Physical Uplink Control Channel (PUCCH).

In some embodiments, the reporting configuration configured to indicate the CLI reporting granularity can be either wideband or subband reporting. Subband reporting provides more granular reporting.

In some embodiments, subbands are determined as follows: when the BWP size is less than 24 physical resource blocks (PRBs), no subband division is performed. For example, when the BWP size is between 24 PRBs and 72 PRBs, the number of subbands can range from 3 (e.g., the BWP size is 24 PRBs and the subband size is 8 PRBs) to 18 (e.g., the BWP size is 72 PRBs and the subband size is 4 PRBs). The specific correspondence between BWP size and subband size is shown in Table 1.

**Table 1**

| BWP size (PRBs) | Subband size (PRBs) |
|---|---|
| 24-72 | 4, 8 |
| 73-144 | 8, 16 |
| 145-275 | 16, 32 |

The specific division of subband size may also vary, and present disclosure does not limit this.

In some embodiments, receiving a Layer 1/Layer 2-based CLI measurement reporting configuration includes receiving a Channel State Information (CSI) reporting configuration, where the CSI reporting configuration carries the Layer 1/Layer 2-based CLI measurement reporting configuration.

Take the example of a terminal device being a terminal device of Release 18 or subsequent release and being a terminal device supporting the DTDD characteristics for explanation. Based on the network device configuration, the terminal device performs corresponding CLI measurement reporting at corresponding time-frequency domain positions.

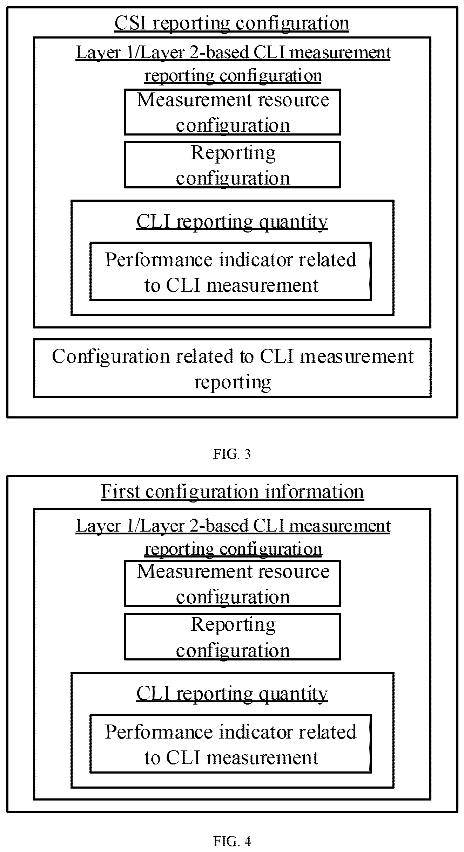

FIG. 3 shows a schematic diagram of a channel state information reporting configuration provided by an example embodiment of the present disclosure. In this embodiment, a terminal device receives a channel state information reporting configuration (CSI-ReportConfig). The CSI reporting configuration carries a Layer 1/Layer 2-based CLI measurement reporting configuration and a CSI measurement reporting-related configuration. In this embodiment, the terms "CSI reporting configuration" and "CSI measurement reporting configuration" have the same meaning; the terms "CLI measurement reporting configuration", "CLI reporting-related configuration" and "CLI reporting configuration" have the same meaning; and the terms "CLI measurement resource-related configuration", "CLI measurement resource configuration", "measurement resource configuration", "resource configuration" and "measurement configuration" have the same meaning.

The Layer 1/Layer 2-based CLI measurement reporting configuration specifically includes at least one of the following:
(1-1) a performance indicator related to CLI measurement;
(1-2) a measurement resource configuration.

In some embodiments, the CSI reporting configuration carries a CLI reporting quantity. The CLI reporting quantity carries a performance indicator related to CLI measurement, i.e., (1-1). Regarding (1-1): the performance indicator related to CLI measurement, as one of the CLI reporting quantity indicators in the CSI reporting configuration, includes at least one of the following:
- CLI-RSRP;
- CLI-RSSI;
- Sounding Reference Signal (SRS)-RSRP;
- RSRP;
- RSSI.

Take the example of the performance indicator related to CLI measurement including CLI-RSRP and CLI-RSSI for explanation. The corresponding CLI reporting quantity in the CSI reporting configuration includes the following configuration items:
CSI-Report, indicating the channel state information reporting configuration;
reportQuantity, indicating the reporting quantity;
CLI-RSRP, indicating the reference signal received power under cross-link interference;
CLI-RSSI, indicating the received signal strength indicator under cross-link interference;
cri-RI-PMI-CQI, indicating the channel state information reference signal (CSI-RS) resource indicator, rank indicator, precoding matrix indicator, and channel quality indicator;
cri-RI-i1, indicating the CSI-RS resource indicator, rank indicator, and wideband indicator;
cri-RI-i1-CQI, indicating the CSI-RS resource indicator, rank indicator, wideband indicator, and channel quality indicator;
pdsch-BundleSizeForCSI, indicating a bundle size for CSI in the physical downlink shared channel (PDSCH);
cri-RI-CQI, indicating the CSI-RS resource indicator, rank indicator, and channel quality indicator;
cri-RSRP, indicating the CSI-RS resource indicator and reference signal received power;
ssb-Index-RSRP, indicating the synchronization signal block (SSB), index value, and reference signal received power;
cri-RI-LI-PMI-CQI, indicating the CSI-RS resource indicator, rank indicator, layer indicator, precoding matrix indicator, and channel quality indicator;
where cri-RI-i1-CQI includes pdsch-BundleSizeForCSI, which ranges from n2 to n4.

In some embodiments, the measurement resource-related configuration may be referred to as a CLI measurement resource configuration or measurement resource configuration. The measurement resource configuration is associated with the CSI reporting configuration. The relationship between the measurement resource configuration and the CSI reporting configuration may be one-to-one, one-to-many, many-to-one, or other association manners, which are not limited in present disclosure.

Regarding (1-2): the terminal device determines the resources for performing CLI measurement based on the measurement resource configuration. CLI measurement includes, but is not limited to, CLI-RSRP measurement and CLI-RSSI measurement. The measurement resource configuration includes at least one of the following:
- a CLI reference signal;
- a time domain configuration of CLI reference signal;
- a frequency domain configuration of CLI reference signal;
- a reference subcarrier spacing (SCS) corresponding to the CLI reference signal;
- a reference bandwidth part (BWP);
- a reference cell where the reference BWP resides;
- a configuration of other reference signals other than the CLI reference signal.

The reference BWP is configured to determine the CLI measurement resources. The CLI reference signal includes at least one of the SRS for RSRP measurement and the resources for RSSI measurement.

The time domain configuration of the CLI reference signal includes the orthogonal frequency division multiplexing (OFDM) symbol where the measurement is performed.

The frequency domain configuration of the CLI reference signal includes the frequency domain resource block (RB)/resource element (RE) configuration.

The reference cell is a cell where the reference BWP resides. If no reference cell is configured, the corresponding reference cell is the primary cell (PCell).

The measurement resource configuration, i.e., the CLI resource configuration (CLI-ResourceConfig), is configured in the CSI-ReportConfig. The CLI-ResourceConfig includes at least one of the SRS resource configuration, RSSI resource configuration, and other reference signal configurations for performing CLI measurements.

In some embodiments, the CLI measurement reporting includes the following configuration items:
CSI-ReportConfig, indicating the channel state information reporting configuration, including the following configuration items:
resourcesForChannelMeasurement, indicating channel measurement resources, represented by CSI resource configuration identifier (CSI-ResourceConfigId);
csi-IM-ResourcesForInterference, indicating CSI instant messaging interference resources, represented by CSI resource configuration identifier;
nzp-CSI-RS-ResourcesForInterference, indicating non-zero power channel state information reference signal and interference resources, represented by CSI resource configuration identifier;
resourceForCLIMeasurement, indicating CLI measurement resources, represented by CLI resource configuration identifier (CLI-ResourceConfigId).

In some embodiments, the measurement resource configuration is configured in at least one of the following ways:
configured within the Layer 1/Layer 2-based CLI measurement reporting configuration;
configured independent of the Layer 1/Layer 2-based CLI measurement reporting configuration.

In some embodiments, CLI-ResourceConfig includes the following configuration items:
CLI-ResourceConfig-r18, indicating the CLI resource configuration of Release 18;
CLI-ResourceConfigId-r18, indicating the CLI resource configuration identifier of Release 18, represented by CLI resource configuration identifier (CLI-ResourceConfigId);
srs-ResourceList-r18, indicating the reference signal resource list of Release 18;
SIZE (1.. maxNrofCLI-SRS-Resources-r18) of SRS-ResourceConfigCLI-r18, indicating the size of the SRS resource configuration CLI of Release 18, ranging from 1 to the maximum value in CLI-SRS-Resources-r18, and indicating the value of srs-ResourceList-r18;
rssi-ResourceList-r18, indicating the received signal strength indicator resource list of Release 18;
SIZE (1.. maxNrofCLI-RSSI-Resources-r18) of RSSI-ResourceConfigCLI-r18, indicating the size of the RSSI resource configuration CLI of Release 18, ranging from 1 to the maximum value in CLI-RSSI-Resources-r18, and indicating the value of rssi-ResourceList-r18.

In some embodiments, CLI-ResourceConfig contains multiple resource sets for performing CLI measurements, including the following configuration items:
CLI-ResourceConfig-r18, indicating the CLI resource configuration of Release 18;
CLI-ResourceConfigId-r18, indicating the CLI resource configuration identifier of Release 18, represented by the CLI resource configuration identifier (CLI-ResourceConfigId);
srs-CLI-ResourceSetList, indicating the sounding reference signal cross-link interference resource list of Release 18;
SIZE (1.. maxNrofCLI-SRS-ResourcesetsPerconfig) of SRS-ResourcesetId, indicating the size of the SRS resource set identifier, ranging from 1 to the maximum value among all resource sets in each CLI-SRS configuration, and indicating the value of srs-CLI-ResourceSetList.

rssi-ResourceList-r18, indicating the received signal strength indicator resource list of Release 18.

SIZE (1.. maxNrofCLI-RSSI-ResourcesetsPerconfig) of RSSI-ResourcesetId, indicating the size of the RSSI resource set identifier, ranging from 1 to the maximum value among all resource sets in each CLI-RSSI configuration, and indicating the value of rssi-ResourceList-r18.

In some examples, a resource set includes multiple resources for performing CLI measurement. The resource set includes the following configuration items:
CLI-SRS-Resourceset, indicating the cross-link interference sounding reference signal resource set;
CLI-SRS-ResourcesetId, indicating the CLI-SRS resource set identifier;
CLI-SRS-Resources, indicating the cross-link interference sounding reference signal resources;
SIZE (1..maxNrofCLI-SRS-ResourcesPerSet) of CLI-SRS-ResourceId, maxNrofCLI-SRS-ResourcesPerSet, indicating the size of the CLI-SRS resource identifier, ranging from 1 to the maximum number of resources in each CLI-SRS set. CLI-SRS-ResourceId indicates the index of CLI-SRS-Resources.

CLI-RSSI-Resourceset, indicating the cross-link interference received signal strength indicator resource set.

CLI-RSSI-ResourcesetId, indicating the CLI-RSSI resource set identifier.

CLI-RSSI-Resources, indicating the cross-link interference received signal strength indicator resource.

SIZE (1..maxNrofCLI-RSSI-ResourcesPerSet) of CLI-RSSI-ResourceId, maxNrofCLI-SRS-ResourcesPerSet indicates the size of CLI-SRS resource identifier, ranging from 1 to the maximum number of resources in each CLI-SRS set. CLI-SRS-ResourceId indicates the index of CLI-SRS-Resources. In some embodiments, measurement resource configuration includes but is not limited to SRS resource configuration and RSSI resource configuration. The SRS resource configuration includes the following configuration items:
SRS-ResourceConfigCLI-r18, indicating sounding reference signal resource configuration for cross-link interference;
srs-Resource-r18, indicating Release 18 monitoring reference signal resource of Release 18, represented by sounding reference signal resource (SRS-Resource);
srs-SCS-r18, indicating the sounding reference signal subcarrier spacing of Release 18, represented by Subcarrier Spacing (SubcarrierSpacing).

refServCellIndex-r18, indicating the index of the reference serving cell to which the refBWP of Release 18 belongs. If this field is absent, the reference serving cell is the primary cell, represented by the reference serving cell index (ServCellIndex).

refBWP-r16, indicating the downlink BWP identifier configured to obtain the SRS resource reference point in Release 16, represented by the bandwidth part identifier (BWP-Id).

RSSI Resource config includes the following configuration items:
RSSI-ResourceConfigCLI-r16, indicating the received signal strength indicator resource configuration cross-link interference of Release 16;
rssi-ResourceId-r18, indicating the received signal strength indicator resource identifier of Release 18, represented by the received signal strength indicator resource identifier of Release 18 (RSSI-ResourceId-r18);
rssi-SCS-r18, indicating the received signal strength subcarrier spacing of Release 18, represented by subcarrier spacing (SubcarrierSpacing);
startPRB-r18, indicating the starting position of the physical resource blocks of Release 18, and a value range being an integer from 0 to N1;
nrofPRBs-r18, indicating the number of the physical resource blocks of Release 18, and a value range being an integer from 4 to N2;
startPosition-r18, indicating the starting position of the Release 18, and a value range being an integer from 0 to 13;
nrofSymbols-r18, indicating the number of symbols of Release 18, and a value range being an integer from 1 to 14;
rssi-Periodicity AndOffset-r18, indicating the RSSI time domain period and slot offset of Release 18, and represented by the RSSI time domain period and slot offset of Release 18 (RSSI-PeriodicityAndOffset-r18);
refServCellIndex-r18, indicating the index of the reference serving cell to which the refBWP of Release 18 belongs. If this field is absent, the reference serving cell is the primary cell, represented by the reference serving cell index (ServCellIndex).

In some embodiments, receiving the Layer 1/Layer 2-based CLI measurement reporting configuration includes: receiving first configuration information, the first configuration information carrying a Layer 1/Layer 2-based CLI measurement reporting configuration;
where the first configuration information is configuration information independent of a CSI reporting configuration.

FIG. 4 illustrates a schematic diagram of first configuration information provided in an example embodiment of the present disclosure. In some embodiments, a terminal device receives the first configuration information. The first configuration information may be referred to as a cross-link interference reporting configuration (CLI-ReportConfig). The CLI-ReportConfig is independent of the channel state information reporting configuration (CSI-ReportConfig) and includes a Layer 1/Layer 2-based CLI measurement reporting configuration, specifically including at least one of the following:
(2-1) a performance indicator related to CLI measurement;
(2-2) a measurement resource configuration.

Regarding (2-1): the performance indicator related to CLI measurement, as the CLI reporting quantity (reportQuantity) indicators in the CLI-ReportConfig, include at least one of the following:
- CLI-RSRP;
- CLI-RSSI;
- SRS-RSRP;
- RSRP;
- RSSI.

Take the example of the performance indicator related to CLI measurement including CLI-RSRP and CLI-RSSI for explanation. The corresponding CLI reporting quantity in the CLI-ReportConfig includes the following configuration items:
CLI-ReportConfig, indicating the cross-link interference reporting configuration;
reportQuantity, indicating the reporting quantity;
CLI-RSRP, indicating the reference signal received power in the case of cross-link interference;
CLI-RSSI, indicating the received signal strength indicator in the case of cross-link interference.

In some embodiments, the measurement resource configuration may be referred to as a CLI resource configuration or a resource configuration, and the measurement resource configuration is associated with the first configuration information. The relationship between the measurement resource configuration and the first configuration information can be one-to-one, one-to-many, many-to-one, or other associations, and present disclosure does not limit this.

Regarding (2-2): the terminal device determines the resources for performing CLI measurement based on the measurement resource configuration. i.e., the CLI resource configuration (CLI-ResourceConfig). CLI measurement includes, but is not limited to, CLI-RSRP measurement and CLI-RSSI measurement. For detailed configuring method of measurement resource configuration, please refer to the corresponding contents in (1-1) above and will not be repeated here.

In some embodiments, the CLI measurement report includes the following configuration items:
CLI-ReportConfig, indicating the CLI reporting configuration;
resourceForCLIMeasurement, indicating the CLI measurement resource, represented by a CLI resource configuration identifier (CLI-ResourceConfigId). In some embodiments, the measurement resource configuration is configured in at least one of the following ways:
   configured within the reporting configuration;
   configured independent of the reporting configuration.

The measurement resource configuration can be configured within the CLI-ReportConfig or independently, and present disclosure does not limit this. For detailed configuring method of measurement resource configuration, please refer to the corresponding contents in (1-2) above and will not be repeated here.

In summary, by Layer 1/Layer 2-based CLI measurement reporting configuration, the method provided in this embodiment enables terminal devices to respond to different channel conditions based on the CLI reporting, thereby reducing the impact of CLI and improving communication performance.

The method provided in this embodiment also receives a CSI reporting configuration that carries a Layer 1/Layer 2-based CLI measurement reporting configuration and defines a protocol framework of CLI measurement reporting based on existing CSI reporting configuration, thereby reducing the impact of standards, improving CLI measurement reporting efficiency, and reducing the impact of CLI.

The method provided in this embodiment also defines a protocol framework of CLI measurement reporting independent of the existing CSI reporting configuration, decoupling from the existing CSI reporting configuration, improving CLI measurement reporting efficiency, and reducing the impact of CLI.

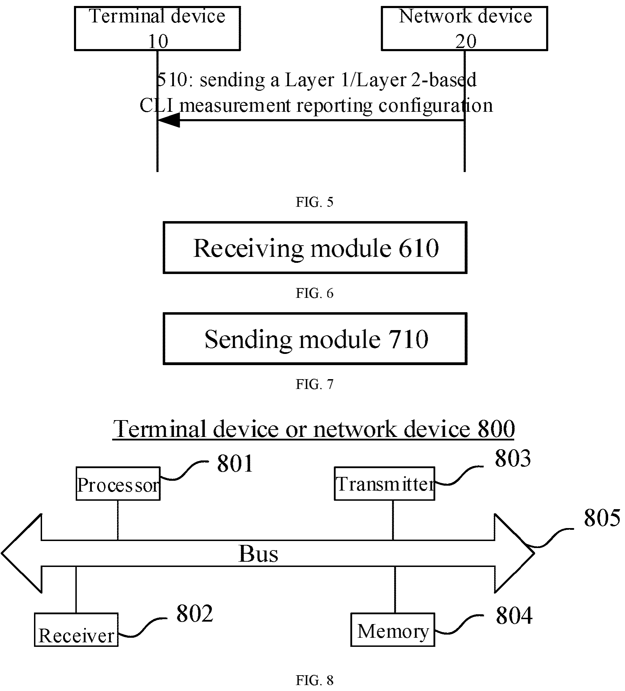

FIG. 5 shows a flowchart of an information transmission method provided in an example embodiment of the present disclosure. The method is performed by a network device and includes:
Step 510: sending a Layer 1/Layer 2-based CLI measurement reporting configuration.

In some embodiments, the Layer 1/Layer 2-based CLI measurement reporting configuration is configured to perform CLI measurement reporting. The Layer 1/Layer 2-based CLI measurement reporting configuration includes at least one of the following:
a measurement resource configuration;
a reporting configuration;
a performance indicator related to CLI measurement.

In some embodiments, the measurement resource configuration indicates at least one of a time domain position and a frequency domain position for CLI measurement.

The reporting configuration indicates at least one of a time domain position, a frequency domain position, and a reporting granularity for CLI reporting.

In some embodiments, the measurement resource configuration includes at least one of the following:
a CLI reference signal;
a time domain configuration of the CLI reference signal;
a frequency domain configuration of the CLI reference signal;
a reference SCS corresponding to the CLI reference signal;
a reference BWP;
a reference cell where the reference BWP resides;
a configuration of other reference signal other than the CLI reference signal;

The reference BWP is configured to determine CLI measurement resources.
In some embodiments, the performance indicator related to CLI measurement includes at least one of the following parameters:
CLI-RSRP;
CLI-RSSI;
SRS-RSRP;
RSRP;
RSSI.

In some embodiments, sending the Layer 1/Layer 2-based CLI measurement reporting configuration includes:
sending a channel state information (CSI) reporting configuration, the CSI reporting configuration carrying the Layer 1/Layer 2-based CLI measurement reporting configuration.

In some embodiments, the measurement resource configuration is associated with the CSI reporting configuration.

In some embodiments, the CSI reporting configuration carries a CLI reporting quantity, and the CLI reporting quantity carries the performance indicator related to the CLI measurement.

In some embodiments, sending the Layer 1/Layer 2-based CLI measurement reporting configuration includes:
sending first configuration information, the first configuration information carrying the Layer 1/Layer 2-based CLI measurement reporting configuration;
where the first configuration information is configuration information independent of the CSI reporting configuration.

In some embodiments, the measurement resource configuration is associated with the first configuration information.

In some embodiments, configuring the measurement resource configuration includes at least one of the following:
configuring within the Layer 1/Layer 2-based CLI measurement reporting configuration;
configuring independently of the Layer 1/Layer 2-based CLI measurement reporting configuration.

For specific implementation details of the above information transmission method, please refer to the terminal device side and it will not be repeated here.

FIG. 6 shows a block diagram of an information transmission device provided in an example embodiment of the present disclosure. The device includes a receiving module 610, where the function of receiving module 610 is implemented by a receiver in a terminal device.

The receiving module 610 is configured to receive a Layer 1/Layer 2-based CLI measurement reporting configuration, and the Layer 1/Layer 2-based CLI measurement reporting configuration is configured to perform CLI measurement reporting.

In one possible design of this embodiment, the Layer 1/Layer 2-based CLI measurement reporting configuration includes at least one of the following:
a measurement resource configuration;
a reporting configuration;
a performance indicators related to CLI measurement.

In one possible design of this embodiment, the measurement resource configuration indicates at least one of a time domain position and a frequency domain position for CLI measurements.

The reporting configuration indicates at least one of a time domain position, a frequency domain position, and a reporting granularity for CLI reporting.

In one possible design of this embodiment, the measurement resource configuration includes at least one of the following:
a CLI reference signal;
a time domain configuration of the CLI reference signal;
a frequency domain configuration of the CLI reference signal;
a reference SCS corresponding to the CLI reference signal;
a reference BWP;
a reference cell where the reference BWP resides;
a configuration of other reference signal other than the CLI reference signal;
where the reference BWP is configured to determine the CLI measurement resource.

In one possible design of this embodiment, the performance indicator related to CLI measurement includes at least one of the following parameters:
CLI-RSRP;
CLI-RSSI;
SRS-RSRP;
RSRP;
RSSI.

In one possible design of this embodiment, the receiving module 610 is configured to receive a channel state information (CSI) reporting configuration, where the CSI reporting configuration carries a layer 1/layer 2-based CLI measurement reporting configuration.

In one possible design of this embodiment, the measurement resource configuration is associated with the CSI reporting configuration.

In one possible design of this embodiment, the CSI reporting configuration carries a CLI reporting quantity, where the CLI reporting quantity carries a performance indicator related to CLI measurement.

In one possible design of this embodiment, the receiving module 610 is configured to receive first configuration information, where the first configuration information carries a layer 1/layer 2-based CLI measurement reporting configuration;
where the first configuration information is configuration information independent of the CSI reporting configuration.

In one possible design of this embodiment the measurement resource configuration is associated with the first configuration information.

In one possible design of this embodiment, configuring the measurement resource configuration includes at least one of the following:
configuring within the Layer 1/Layer 2-based CLI measurement reporting configuration;
configuring independent of the Layer 1/Layer 2-based CLI measurement reporting configuration.

FIG. 7 shows a block diagram of an information transmission device provided in an example embodiment of the present disclosure. The device includes a sending module 710, where the function of sending module 710 is implemented by a transmitter in a network device.

The sending module 710 is configured to send a Layer 1/Layer 2-based CLI measurement reporting configuration, and the Layer 1/Layer 2-based CLI measurement reporting configuration is configured to perform CLI measurement reporting.

In one possible design of this embodiment, the Layer 1/Layer 2-based CLI measurement reporting configuration includes at least one of the following:
a measurement resource configuration;
a reporting configuration;
a performance indicator related to the CLI measurement.

In one possible design of this embodiment, the measurement resource configuration indicates at least one of a time domain position and a frequency domain position for the CLI measurement;

The reporting configuration indicates at least one of a time domain position, a frequency domain position, and a reporting granularity for the CLI report.

In one possible design of this embodiment, the measurement resource configuration includes at least one of the following:
a CLI reference signal;
a time domain configuration of the CLI reference signal;
a frequency domain configuration of the CLI reference signal;
a reference SCS corresponding to the CLI reference signal;
a reference BWP in which the CLI reference signal resides;
a reference BWP;
a reference cell in which the reference BWP resides;
a configuration of other reference signal other than the CLI reference signal;
where the reference BWP is configured to determine the CLI measurement resource.

In one possible design of this embodiment, the performance indicator related to the CLI measurement includes at least one of the following parameters:
CLI-RSRP;
CLI-RSSI;
SRS-RSRP;
RSRP;
RSSI.

In one possible design of this embodiment, the sending module 710 is configured to send a channel state information (CSI) reporting configuration, where the CSI reporting configuration carries a Layer 1/Layer 2-based CLI measurement reporting configuration.

In one possible design of this embodiment the measurement resource configuration is associated with the CSI reporting configuration.

In one possible design of this embodiment, the CSI reporting configuration carries a CLI reporting quantity, and the CLI reporting quantity carries a performance indicator related to the CLI measurement.

In one possible design of this embodiment, the sending module 710 is configured to send first configuration information, where the first configuration information carries a Layer 1/Layer 2-based CLI measurement reporting configuration;
where the first configuration information is configuration information independent of the CSI reporting configuration.

In one possible design of this embodiment the measurement resource configuration is associated with the first configuration information.

In one possible design of this embodiment, configuring the measurement resource configuration includes at least one of the following:
configuring within the Layer 1/Layer 2-based CLI measurement reporting configuration;
configuring independent of the Layer 1/Layer 2-based CLI measurement reporting configuration.

FIG. 8 shows a schematic structural diagram of a terminal device or network device 800 provided in an example embodiment of the present disclosure, including: a processor 801, a receiver 802, a transmitter 803, a memory 804, and a bus 805.

The processor 801 includes one or more processing cores. The processor 801 executes various functional applications and information processing by running software programs and modules.

The receiver 802 and the transmitter 803 can be implemented as a communication component. The communication component can be a communication chip and is referred to as a transceiver. In some embodiments, the receiver 802 can be configured to implement the functions and steps of the receiving module 610 described above, and the transmitter 803 can be configured to implement the functions and steps of the sending module 710 described above.

The memory 804 is connected to the processor 801 via the bus 805.

The memory 804 can be configured to store at least one instruction, and the processor 801 is configured to execute the at least one instruction to implement the various steps in the above-described method embodiments. Furthermore, the memory 804 can be implemented by any type of volatile or nonvolatile storage device, or a combination thereof. Volatile or nonvolatile storage devices include, but are not limited to, magnetic or optical disks, electrically erasable programmable read-only memory (EEPROM), erasable programmable read-only memory (EPROM), static random access memory (SRAM), read-only memory (ROM), magnetic storage, flash memory, and programmable read-only memory (PROM).

In some embodiments, the receiver 802 independently receives signals/data, or the processor 801 controls the receiver 802 to receive signals/data, or the processor 801 requests the receiver 802 to receive signals/data, or the processor 801 cooperates with the receiver 802 to receive signals/data. In some embodiments, the transmitter 803 independently transmits signals/data, or the processor 801 controls the transmitter 803 to transmit signals/data, or the processor 801 requests the transmitter 803 to transmit signals/data, or the processor 801 cooperates with the transmitter 803 to transmit signals/data.

In example embodiments, a computer-readable storage medium is also provided. The computer-readable storage medium stores at least one instruction, at least one program, code set, or instruction set. The at least one instruction, at least one program, code set, or instruction set is loaded and executed by the processor to implement the information transmission methods provided in the above-mentioned method embodiments.

In example embodiments, a computer program product or computer program is also provided. When executed on the processor, the computer program product or computer program enables a terminal device or network device to perform the information transmission methods provided in the above-mentioned method embodiments.

It will be understood by those skilled in the art that all or part of the steps of implementing the above-mentioned embodiments can be performed by hardware or by a program instructing the relevant hardware to perform the steps. The program can be stored in a computer-readable storage medium, such as a read-only memory, a magnetic disk, or an optical disk.

The above are only optional embodiments of the present disclosure and are not intended to limit the present disclosure. Any modifications, equivalent replacements, improvements, etc. made within the spirit and principles of the present disclosure should be included in the scope of protection of the present disclosure.

## Claims

1. An information transmission method, performed by a terminal device, comprising:
receiving a Layer 1/Layer 2-based cross-link interference CLI measurement reporting configuration, wherein the Layer 1/Layer 2-based CLI measurement reporting configuration is configured to perform CLI measurement reporting.

2. The method according to claim 1. wherein the Layer 1/Layer 2-based CLI measurement reporting configuration comprises at least one of:
a measurement resource configuration;
a reporting configuration; or
a performance indicator related to CLI measurement.

3. The method according to claim 2, wherein
the measurement resource configuration indicates at least one of a time domain position and a frequency domain position of the CLI measurement; and
the reporting configuration indicates at least one of a time domain position, a frequency domain position, and a reporting granularity of CLI reporting.

4. The method according to claim 2, wherein the measurement resource configuration comprises at least one of:
a CLI reference signal;
a time domain configuration of the CLI reference signal;
a frequency domain configuration of the CLI reference signal;
a reference subcarrier spacing SCS corresponding to the CLI reference signal;
a reference bandwidth part BWP;
a reference cell in which the reference BWP resides; or
a configuration of other reference signal other than the CLI reference signal;
wherein the reference BWP is configured to determine a CLI measurement resource.

5. The method according to claim 2, wherein the performance indicator related to the CLI measurement comprises at least one of the following parameters:
a cross-link interference - reference signal received power CLI-RSRP;
a cross-link interference - received signal strength CLI-RSSI;
a sounding reference signal - reference signal received power SRS-RSRP;
a reference signal received power RSRP; or
a received signal strength RSSI.

6. The method according to any one of claims 2 to 5, wherein receiving the Layer 1/Layer 2-based CLI measurement reporting configuration comprises:
receiving a Channel State Information CSI reporting configuration, wherein the CSI reporting configuration carries the Layer 1/Layer 2-based CLI measurement reporting configuration.

7. The method according to claim 6, wherein the measurement resource configuration is associated with the CSI reporting configuration.

8. The method according to claim 7, wherein the CSI reporting configuration carries a CLI reporting quantity, and the CLI reporting quantity carries the performance indicator related to the CLI measurement.

9. The method according to any one of claims 2 to 5, wherein receiving the Layer 1/Layer 2-based CLI measurement reporting configuration comprises receiving first configuration information, wherein the first configuration information carries the Layer 1/Layer 2-based CLI reporting configuration;
wherein the first configuration information is configuration information independent of the CSI reporting configuration.

10. The method according to claim 9, wherein the measurement resource configuration is associated with the first configuration information.

11. The method according to any one of claims 6 to 10. wherein the measurement resource configuration is configured in at least one of the following ways:
configured within the Layer 1/Layer 2-based CLI measurement reporting configuration; or
configured independent of the Layer 1/Layer 2-based CLI measurement reporting configuration.

12. An information transmission method, performed by a network device, comprising:
sending a Layer 1/Layer 2-based cross-link interference CLI measurement reporting configuration, wherein the Layer 1/Layer 2-based CLI measurement reporting configuration is configured to perform CLI measurement reporting.

13. The method according to claim 12, wherein the Layer 1/Layer 2-based CLI measurement reporting configuration comprises at least one of:
a measurement resource configuration;
a reporting configuration; or
a performance indicator related to CLI measurement.

14. The method according to claim 13, wherein
the measurement resource configuration indicates at least one of a time domain position and a frequency domain position of the CLI measurement; and
the reporting configuration indicates at least one of a time domain position, a frequency domain position, and a reporting granularity of CLI reporting.

15. The method according to claim 13, wherein the measurement resource configuration comprises at least one of:
a CLI reference signal;
a time domain configuration of the CLI reference signal;
a frequency domain configuration of the CLI reference signal;
a reference subcarrier spacing SCS corresponding to the CLI reference signal;
a reference bandwidth part BWP;
a reference cell where the reference BWP resides; or
a configuration of other reference signal other than the CLI reference signal;
wherein the reference BWP is configured to determine a CLI measurement resource.

16. The method according to claim 13. wherein the performance indicator related to CLI measurement comprises at least one of the following parameters:
a Cross-link interference - reference signal received power CLI-RSRP;
a Cross-link interference - received signal strength CLI-RSSI;
a sounding reference signal - reference signal received power SRS-RSRP;
a reference signal received power RSRP; or
a received signal strength RSSI.

17. The method according to any one of claims 13 to 16, wherein sending the Layer 1/Layer 2-based CLI measurement reporting configuration comprises:
sending a channel state information (CSI) reporting configuration, wherein the CSI reporting configuration carries the Layer 1/Layer 2-based CLI measurement reporting configuration.

18. The method according to claim 17, wherein the measurement resource configuration is associated with the CSI reporting configuration.

19. The method according to claim 18, wherein the CSI reporting configuration carries a CLI reporting quantity, wherein the CLI reporting quantity carries the performance indicator related to the CLI measurement.

20. The method according to any one of claims 13 to 16, wherein sending the Layer 1/Layer 2-based CLI measurement reporting configuration comprises sending first configuration information, wherein the first configuration information carries the Layer 1/Layer 2-based CLI measurement reporting configuration;
wherein the first configuration information is configuration information independent of the CSI reporting configuration.

21. The method according to claim 20, wherein the measurement resource configuration is associated with the first configuration information.

22. The method according to any one of claims 17 to 21. wherein the measurement resource configuration is configured in at least one of the following ways:
configured within the Layer 1/Layer 2-based CLI measurement reporting configuration; or
configured independent of the Layer 1/Layer 2-based CLI measurement reporting configuration.

23. An information transmission device, comprising:
a receiving module configured to receive a Layer 1/Layer 2-based CLI measurement reporting configuration, wherein the Layer 1/Layer 2-based CLI measurement reporting configuration is configured to perform CLI measurement reporting.

24. An information transmission device, comprising:
a sending module configured to send a Layer 1/Layer 2-based CLI measurement reporting configuration, wherein the Layer 1/Layer 2-based CLI measurement reporting configuration is configured to perform CLI measurement reporting.

25. A terminal device, comprising:
a processor;
a transceiver connected to the processor; and
a memory for storing executable instructions for the processor;
wherein the processor is configured to load and execute the executable instructions to implement the information transmission method according to any one of claims 1 to 11.

26. A network device, comprising:
a processor;
a transceiver connected to the processor; and
a memory for storing executable instructions for the processor;
wherein the processor is configured to load and execute the executable instructions to implement the information transmission method according to any one of claims 12 to 22.

27. A computer-readable storage medium, wherein the computer-readable storage medium stores a computer program, wherein the computer program is loaded and executed by a processor to implement the information transmission method according to any one of claims 1 to 22.

28. A computer program product, wherein the computer program product comprises computer instructions, the computer instructions are stored in a computer-readable storage medium, a processor obtains the computer instructions from the computer-readable storage medium, and the processor loads and executes the computer instructions to implement the information transmission method according to any one of claims 1 to 22.
